# EUROPEAN PATENT APPLICATION

(11) **EP 4 808 101 A1**
(43) Date of publication of application: **16.09.2026**
(21) Application number: 25197271.7
(22) Date of filing: 21.08.2025
(51) Int. Cl.: H04N 1/00

(54) **INFORMATION PROCESSING SYSTEM AND PROGRAM**

(30) Priority: 13.03.2025 JP 2025040459
(71) Applicant: FUJIFILM Business Innovation Corp., Minato-ku Tokyo (JP)
(72) Inventor: KANEKO, Atsuki, Yokohama-shi (JP); MIYAMORI, Shinya, Yokohama-shi (JP); OKI, Tomoya, Yokohama-shi (JP); KATO, Ryoma, Yokohama-shi (JP)
(74) Representative: Haseltine Lake Kempner LLP

(57) **Abstract**

An information processing system includes a processor configured to: specify a defect portion that is a portion having a defect of a formed image that is an image formed by an image forming apparatus; and specify a possible portion that is a portion possibly having a defect of the formed image or another image formed by the image forming apparatus, based on the specified defect portion.

## Description

### Background

### (i) Technical Field

The present disclosure relates to an information processing system and a program.

### (ii) Related Art

Japanese Unexamined Patent Application Publication No. 2016-46595 discloses an image processing apparatus including acquisition means for acquiring a feature amount from the result of reading a chart formed by image forming means, and determination means for determining whether an image formed by the image forming means includes a defect in accordance with the feature amount acquired by the acquisition means.

Japanese Unexamined Patent Application Publication No. 2019-22155 discloses a process of causing a chart to be printed by an image forming apparatus of a maintenance target and scanned from a remote computer, analyzing the chart, and transmitting the result to the computer.

Japanese Unexamined Patent Application Publication No. 2013-116632 discloses a process of executing a diagnostic routine of evaluating the performance of a printer in the printer using a set of instructions stored in a computer-readable medium.

Japanese Unexamined Patent Application Publication No. 2022-41718 discloses an image processing apparatus that outputs a result display screen that enables discrimination between a defect of an inspection target image and a defect detection process that has detected the defect.

### Summary

A person who performs diagnosis may diagnose an image forming apparatus that forms an image or a reading device that reads a recording material on which an image has been formed.

In this case, the larger the amount of information presented to the person who performs diagnosis, the higher the accuracy of diagnosis.

Accordingly, it is an object of the present disclosure to improve the accuracy of diagnosis performed on an image forming apparatus that forms an image or a reading device that reads a recording material, compared to a case where a portion possibly having a defect or a portion possibly having a reading failure is not specified.

According to a first aspect of the present disclosure, there is provided an information processing system including a processor configured to: specify a defect portion that is a portion having a defect of a formed image that is an image formed by an image forming apparatus; and specify a possible portion that is a portion possibly having a defect of the formed image or another image formed by the image forming apparatus, based on the specified defect portion.

According to a second aspect of the present disclosure, there is provided the information processing system according to the first aspect, in which the processor is configured to further generate an image in which a position indication image that is an image indicating a position of the possible portion has been added to a read image obtained by reading the formed image; and further generate an image in which the position indication image has been added to a read image obtained by reading the other image.

According to a third aspect of the present disclosure, there is provided the information processing system according to the first aspect, in which the processor is configured to further generate an image in which a position indication image that is an image indicating a position of the possible portion and cause information that is information about a cause of the defect that the possible portion possibly has have been added to a read image obtained by reading the formed image; and further generate an image in which the position indication image that is the image indicating the position of the possible portion and the cause information that is the information about the cause of the defect that the possible portion possibly has have been added to a read image obtained by reading the other image.

According to a fourth aspect of the present disclosure, there is provided the information processing system according to the first aspect, in which the processor is configured to further generate an image in which a position indication image that is an image indicating a position of the possible portion and a defect indication image that is an image indicating a position of the defect portion have been added to a read image obtained by reading the formed image.

According to a fifth aspect of the present disclosure, there is provided the information processing system according to the fourth aspect, in which the position indication image and the defect indication image are different from each other.

According to a sixth aspect of the present disclosure, there is provided the information processing system according to the fifth aspect, in which at least one of a color and a shape is different between the position indication image and the defect indication image.

According to a seventh aspect of the present disclosure, there is provided the information processing system according to the sixth aspect, in which the position indication image is an image surrounding the possible portion with a line, in which the defect indication image is an image surrounding the defect portion with a line, and in which a line type of the position indication image and a line type of the defect indication image are different from each other.

According to an eighth aspect of the present disclosure, there is provided the information processing system according to the first aspect, in which the specified defect portion includes multiple specified defect portions, and the processor is configured to specify the possible portion in the formed image based on an arrangement interval of the multiple specified defect portions.

According to a ninth aspect of the present disclosure, there is provided the information processing system according to the eighth aspect, in which the processor is configured to specify, as the possible portion, a portion separated from a defect portion serving as a predetermined reference among the multiple specified defect portions by an integer multiple of the arrangement interval.

According to a tenth aspect of the present disclosure, there is provided the information processing system according to the first aspect, in which the processor is configured to specify the possible portion in the other image based on a position of the defect portion in the formed image.

According to an eleventh aspect of the present disclosure, there is provided the information processing system according to the tenth aspect, in which the processor is configured to specify a relative reference position that is a position of the defect portion in the formed image and is a relative position of the defect portion with respect to a reference position of the formed image; and specify the possible portion in the other image based on a reference position of the other image and the relative reference position.

According to a twelfth aspect of the present disclosure, there is provided the information processing system according to the first aspect, in which the processor is configured to specify the possible portion in the formed image based on the specified defect portion and component information that is information about a constituent component that is a component included in the image forming apparatus.

According to a thirteenth aspect of the present disclosure, there is provided the information processing system according to the twelfth aspect, in which the processor is configured to specify the possible portion in the formed image based on the specified defect portion and information about a circumferential length of the constituent component that rotates.

According to a fourteenth aspect of the present disclosure, there is provided an information processing system including a processor configured to specify a defect portion that is a portion having a defect of a read image that is an image obtained by a reading device reading a recording material; and specify a possible portion that is a portion possibly having a defect of the read image, based on the specified defect portion.

According to a fifteenth aspect of the present disclosure, there is provided a program causing a computer to execute a process, the process including specifying a defect portion that is a portion having a defect of a formed image that is an image formed by an image forming apparatus; and specifying a possible portion that is a portion possibly having a defect of the formed image or another image formed by the image forming apparatus, based on the specified defect portion.

With the information processing system according to the first aspect of the present disclosure, it is possible to improve the accuracy of diagnosis performed on an image forming apparatus that forms an image or a reading device that reads a recording material, compared to a case where a portion possibly having a defect or a portion possibly having a reading failure is not specified.

With the information processing system according to the second aspect of the present disclosure, it is possible to more clearly inform a person who performs diagnosis of the possible portion, compared to a case where the image in which the position indication image has been added is not generated.

With the information processing system according to the third aspect of the present disclosure, it is possible to inform the person who performs diagnosis of the information about the cause of the defect.

With the information processing system according to the fourth aspect of the present disclosure, it is possible to more clearly inform the person who performs diagnosis of the possible portion and the defect portion, compared to a case where the image in which the position indication image and the defect indication image have been added is not generated.

With the information processing system according to the fifth aspect of the present disclosure, it is possible to prevent the person who performs diagnosis from recognizing the possible portion as the defect portion or recognizing the defect portion as the possible portion, compared to a case where the position indication image and the defect indication image are the same.

With the information processing system according to the sixth aspect of the present disclosure, it is possible to prevent the person who performs diagnosis from recognizing the possible portion as the defect portion or recognizing the defect portion as the possible portion, compared to a case where the color and the shape of the position indication image and the color and the shape of the defect indication image coincide with each other.

With the information processing system according to the seventh aspect of the present disclosure, it is possible to prevent the person who performs diagnosis from recognizing the possible portion as the defect portion or recognizing the defect portion as the possible portion, compared to a case where the line type of the position indication image and the line type of the defect indication image are the same.

With the information processing system according to the eighth aspect of the present disclosure, it is possible to specify the possible portion in the formed image based on the defect portion.

With the information processing system according to the ninth aspect of the present disclosure, it is possible to specify the possible portion in the formed image based on the defect portion.

With the information processing system according to the tenth aspect of the present disclosure, it is possible to specify the possible portion for the other image different from the formed image that is a target of specifying the defect portion.

With the information processing system according to the eleventh aspect of the present disclosure, it is possible to specify the possible portion in the other image based on the defect portion in the formed image.

With the information processing system according to the twelfth aspect of the present disclosure, it is possible to specify the possible portion in the formed image based on the information about the constituent component included in the image forming apparatus.

With the information processing system according to the thirteenth aspect of the present disclosure, it is possible to specify the possible portion in the formed image based on the information about the constituent component included in the image forming apparatus.

With the information processing system according to the fourteenth aspect of the present disclosure, it is possible to improve the accuracy of diagnosis performed on an image forming apparatus that forms an image or a reading device that reads a recording material, compared to a case where a portion possibly having a defect or a portion possibly having a reading failure is not specified.

With the program according to the fifteenth aspect of the present disclosure, it is possible to improve the accuracy of diagnosis performed on an image forming apparatus that forms an image or a reading device that reads a recording material, compared to a case where a portion possibly having a defect or a portion possibly having a reading failure is not specified.

### Brief Description of the Drawings

An exemplary embodiment of the present disclosure will be described in detail based on the following figures, wherein:
Fig. 1 is a diagram illustrating an example of a diagnostic system;
Fig. 2 is a diagram illustrating an example of a hardware configuration;
Fig. 3 is a diagram illustrating an image forming apparatus;
Figs. 4A and 4B are diagrams illustrating a process performed on a read image by a central processing unit (CPU) of a server apparatus;
Fig. 5 is a diagram illustrating another example of a generated image;
Fig. 6 is a diagram illustrating still another example of the generated image;
Fig. 7 is a diagram illustrating yet another example of the generated image;
Figs. 8A and 8B are diagrams illustrating further examples of the generated image;
Figs. 9A and 9B are diagrams illustrating another example of a method of specifying a possible portion;
Fig. 10 illustrates a still further example of the generated image;
Fig. 11 illustrates a yet further example of the generated image;
Fig. 12 is a diagram illustrating a yet further example of the generated image;
Figs. 13A and 13B are diagrams illustrating a yet further example of the generated image; and
Figs. 14A and 14B are diagrams illustrating another example of a process.

### Detailed Description

Hereinafter, an exemplary embodiment of the present disclosure will be described with reference to the drawings.

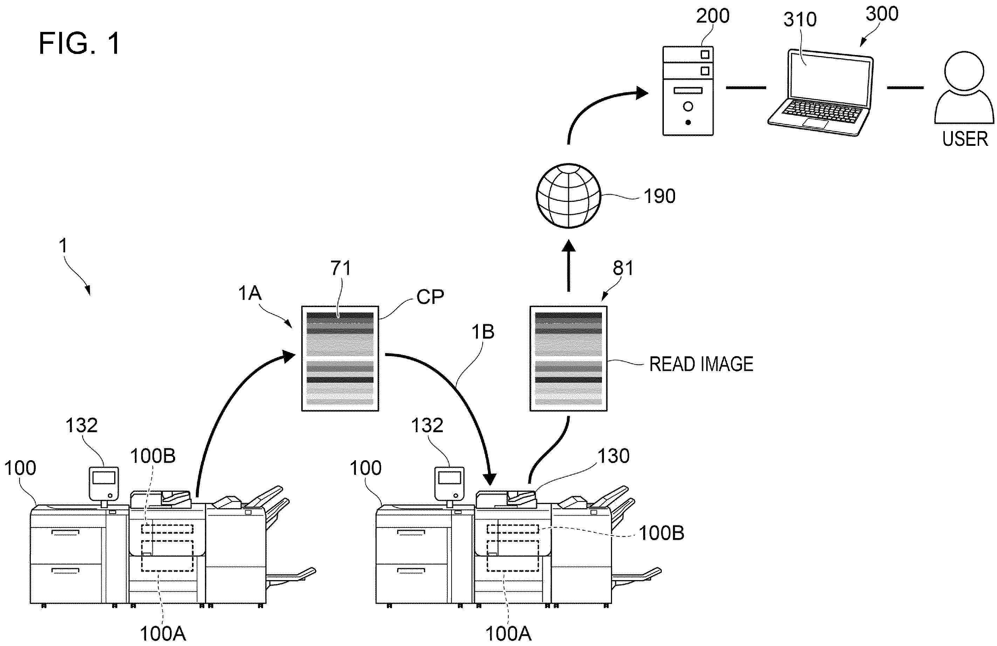

Fig. 1 is a diagram illustrating an example of a diagnostic system 1.

The diagnostic system 1 of the present exemplary embodiment is provided with multiple image forming apparatuses 100. Fig. 1 illustrates one image forming apparatus 100 of the multiple image forming apparatuses 100.

The diagnostic system 1 is also provided with a server apparatus 200 connected to each of the multiple image forming apparatuses 100 via a communication line 190.

In the present exemplary embodiment, the server apparatus 200 diagnoses each of the image forming apparatuses 100, as an example of an information processing system.

The diagnostic system 1 of the present exemplary embodiment is further provided with a user terminal 300 that receives an operation from a user. The user terminal 300 is connected to the server apparatus 200.

The user terminal 300 is provided with a display device 310. The user terminal 300 is implemented by a computer. Examples of the form of the user terminal 300 include a personal computer (PC), a smartphone, and a tablet terminal.

The image forming apparatus 100 is provided with an image forming section 100A as an example of image forming means for forming an image on a sheet as an example of a recording material.

The image forming section 100A forms an image on a sheet by using an electrophotographic system. Alternatively, the image forming section 100A may form an image on a sheet by using another system such as an inkjet system, instead of the electrophotographic system.

The image forming apparatus 100 is further provided with an information processing section 100B. The information processing section 100B executes various processes performed for the image forming apparatus 100.

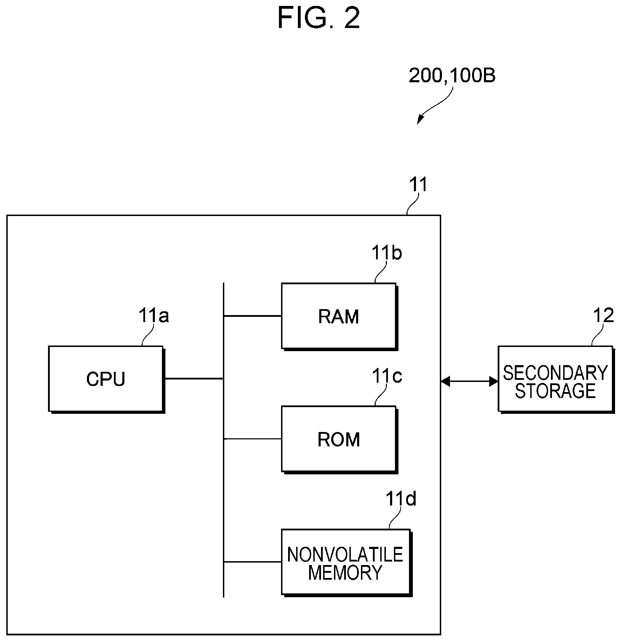

Fig. 2 is a diagram illustrating an example of a hardware configuration.

Fig. 2 illustrates an example of a hardware configuration of the server apparatus 200 and the information processing section 100B provided in the image forming apparatus 100.

The server apparatus 200, and the information processing section 100B provided in the image forming apparatus 100 are implemented by computers.

Each of the server apparatus 200 and the information processing section 100B includes an arithmetic processing unit 11 that executes digital arithmetic processing in accordance with a program, and a secondary storage 12 that stores information.

The secondary storage 12 is implemented by an existing information storage device such as a hard disk drive (HDD), a semiconductor memory, or a magnetic tape.

The arithmetic processing unit 11 is provided with a CPU 11a as an example of a processor.

The arithmetic processing unit 11 is also provided with a random-access memory (RAM) 11b used as a work memory or the like of the CPU 11a. The arithmetic processing unit 11 is further provided with a read-only memory (ROM) 11c in which a program or the like to be executed by the CPU 11a is stored.

The arithmetic processing unit 11 is further provided with a nonvolatile memory 11d that is configured to be rewritable and hold data even when power supply is stopped.

The nonvolatile memory 11d is constituted by, for example, a static random-access memory (SRAM), a flash memory, or the like backed up by a battery. The secondary storage 12 stores files and the like, and also stores programs to be executed by the arithmetic processing unit 11.

In the present exemplary embodiment, the CPU 11a of the arithmetic processing unit 11 reads a program stored in the ROM 11c or the secondary storage 12. The CPU 11a executes a program stored in the ROM 11c or the secondary storage 12. Accordingly, various processes are executed. The various processes are executed by the CPU 11a.

The program to be executed by the CPU 11a is provided to the image forming apparatus 100 or the server apparatus 200 via a recording medium.

An example of the recording medium is a magnetic recording medium such as a magnetic tape or a magnetic disk. Another example of the recording medium is an optical recording medium such as an optical disc.

Still another example of the recording medium is a magneto-optical recording medium. Yet another example of the recording medium is a semiconductor memory.

The program to be executed by the CPU 11a may be provided to the image forming apparatus 100 or the server apparatus 200 using communication means such as the Internet.

Among the processes described below, the process performed by the image forming apparatus 100 is performed by the CPU 11a as an example of a processor provided in the image forming apparatus 100.

Among the processes described below, the process performed by the server apparatus 200 is performed by the CPU 11a as an example of a processor provided in the server apparatus 200.

In the processes described below, the server apparatus 200 as an example of an information processing system performs a process for diagnosis on the image forming apparatus 100.

The information processing system that performs the process for diagnosis on the image forming apparatus 100 may be implemented by one apparatus such as one server apparatus 200. In one example, the information processing system that performs the process for diagnosis on the image forming apparatus 100 may be implemented by multiple apparatuses such as multiple server apparatuses 200.

In one example, the process for diagnosis on the image forming apparatus 100 may be performed by the information processing section 100B provided in the image forming apparatus 100. In this case, the information processing section 100B serves as the information processing system that performs the process for diagnosis on the image forming apparatus 100.

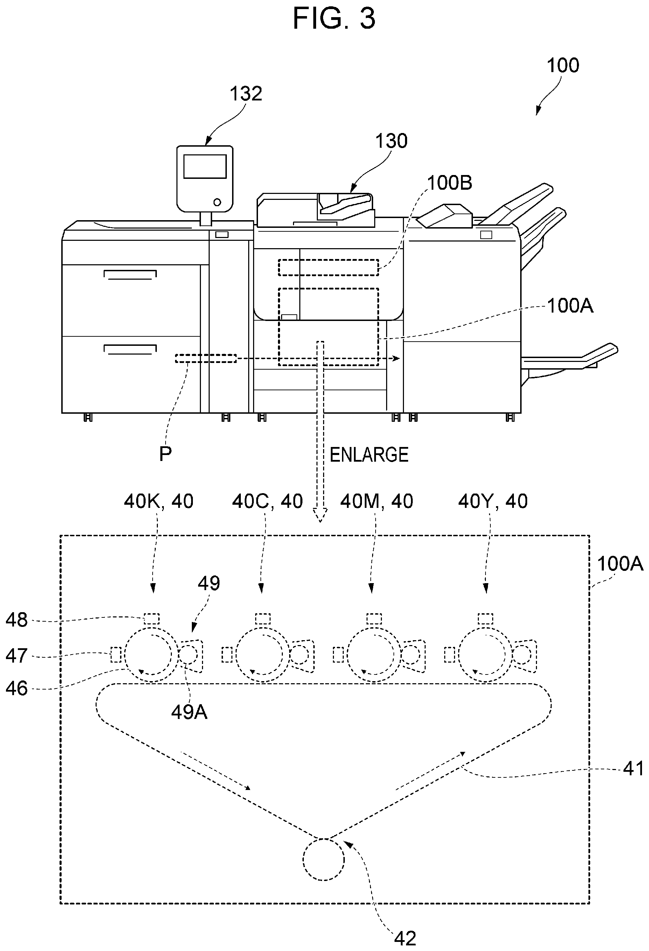

Fig. 3 is a diagram illustrating the image forming apparatus 100.

The image forming apparatus 100 includes the image forming section 100A that forms an image on a sheet P that is an example of a recording material. The image forming apparatus 100 has an information transmission function of transmitting information to the server apparatus 200 illustrated in Fig. 1.

In the present exemplary embodiment, when the sheet P passes through the image forming section 100A, the sheet P passes through the image forming section 100A in a state in which one surface of the sheet P faces the image forming section 100A. Accordingly, an image is formed on the one surface of the sheet P.

The image forming section 100A is provided with multiple image forming units 40 that form images. The image forming section 100A is further provided with an intermediate transfer belt 41 as an example of a transfer body onto which the images formed by the multiple image forming units 40 are transferred.

The intermediate transfer belt 41 is provided in an annular shape. The intermediate transfer belt 41 rotates in a counterclockwise direction in the drawing by receiving a force from a driving source (not illustrated).

The images formed by the image forming units 40 are transferred onto the outer peripheral surface of the intermediate transfer belt 41. Accordingly, the images are moved to a transfer portion 42 by the intermediate transfer belt 41 that rotates.

Then, the images are transferred onto the one surface of the sheet P passing through the transfer portion 42 at the transfer portion 42. Accordingly, the images are formed on the sheet P.

In the present exemplary embodiment, a first image forming unit 40Y that forms a yellow image and a second image forming unit 40M that forms a magenta image are provided as the image forming units 40. Further, a third image forming unit 40C that forms a cyan image and a fourth image forming unit 40K that forms a black image are provided as the image forming units 40.

In the present exemplary embodiment, when a color image is formed, four color images are transferred onto the outer peripheral surface of the intermediate transfer belt 41 and then transferred onto the sheet P.

Each of the image forming units 40 is provided with a photoreceptor drum 46 as an example of a rotating member. The photoreceptor drum 46 is formed in a cylindrical shape. The photoreceptor drum 46 rotates in a clockwise direction.

A charger 47 that charges the photoreceptor drum 46 is provided around the photoreceptor drum 46. Further, an exposure device 48 is provided to form an electrostatic latent image on the photoreceptor drum 46. Further, a developing device 49 is provided to develop the electrostatic latent image on the photoreceptor drum 46 with toner.

The developing device 49 is provided with a developing roller 49A as another example of a rotating member. The developing roller 49A is formed in a cylindrical shape. The developing roller 49A rotates in the clockwise direction or the counterclockwise direction in the drawing.

In the developing device 49, toner as an example of a developer is supplied to the surface of the developing roller 49A, and the toner adheres to the surface.

Then, in the present exemplary embodiment, the toner adhering to the surface of the developing roller 49A is supplied to the surface of the photoreceptor drum 46. Accordingly, development is performed, and an image formed of the toner is formed on the surface of the photoreceptor drum 46.

The image is transferred onto the outer peripheral surface of the intermediate transfer belt 41. The image is then moved to the transfer portion 42. The image is then transferred onto the sheet P.

The image forming apparatus 100 is also provided with an image reading device 130 as an example of image reading means for reading an image formed on a recording material such as a sheet P.

The image reading device 130 is a so-called scanner having a function of transporting a sheet P.

The image reading device 130 is provided with a light source that emits light to be radiated on the sheet P. The image reading device 130 is also provided with a light receiver such as a charge coupled device (CCD) that receives reflected light from the sheet P.

In the present exemplary embodiment, a read image 81 (described later) is generated based on the reflected light received by the light receiver.

In the image reading device 130, a reading position for an image is set in advance. The light source and the light receiver are provided at the reading position.

The image reading device 130 reads images in an area of sequentially transported sheets P that have reached the reading position.

In the example illustrated in Fig. 3, the image reading device 130 is provided in an upper portion of the image forming apparatus 100. The image reading device 130 sequentially reads sheets P set by the user. The sheet P is not limited to a sheet P on which an image has been formed by the image forming apparatus 100, and may be a sheet P on which an image has been formed by another image forming apparatus 100.

The installation manner of the image reading device 130 is not limited to the manner illustrated in Fig. 3.

The image reading device 130 may be provided inside the image forming apparatus 100 and on a transport path for a sheet P.

In this case, sheets P on which images have been formed by the image forming section 100A sequentially pass through the image reading device 130. During this passage, the images of the sheets P are sequentially read.

In the present exemplary embodiment, the image reading device 130 is provided with a reversing mechanism for a sheet P. Accordingly, the sheet P, the front and back surfaces of which have been reversed, may be supplied to the reading position for an image.

In the present exemplary embodiment, the sheet P from which the image formed on one surface has been read may be reversed and supplied to the reading position again. Accordingly, the images on the front and back surfaces of the sheet P may be read.

In one example, when an image of a sheet P is read, the sheet P may be placed on a document table (not illustrated) constituted by a plate-shaped glass or the like. In this case, the sheet P placed on the document table is read.

Further, each of the image forming apparatuses 100 is provided with an operation receiver 132 that receives an operation from a user. The operation receiver 132 is constituted by a so-called touch panel. The operation receiver 132 displays information to the user and receives an operation performed by the user.

The display of information to the user and the reception of an operation from the user do not have to be performed by one operation receiver 132. The operation receiver and the information display may be provided individually.

In the present exemplary embodiment, when the image forming apparatus 100 illustrated in Fig. 1 is diagnosed, first, the image forming section 100A is operated to form an image for diagnosis on a sheet P.

Hereinafter, the image for diagnosis is referred to as a "formed image 71". When the image forming section 100A is operated, all of the four image forming units 40 are operated to form the formed image 71, or one image forming unit 40 is operated to form the formed image 71.

Accordingly, a formed sheet CP that is a sheet P on which the formed image 71 has been formed is generated as indicated by reference sign 1A in Fig. 1.

The formed image 71 is an image to be used for diagnosis on the image forming apparatus 100. In the present exemplary embodiment, a formed sheet CP on which the formed image 71 to be used for diagnosis on the image forming apparatus 100 has been formed is generated.

When the formed sheet CP is generated, the formed sheet CP is set in the image reading device 130 as indicated by reference sign 1B in Fig. 1. Then, the image reading device 130 is used to read the formed sheet CP on which the formed image 71 has been formed.

Accordingly, a read image 81 obtained by reading the formed sheet CP is generated.

In the present exemplary embodiment, the data of the read image 81 is transmitted to the server apparatus 200 and stored in the server apparatus 200.

The server apparatus 200 diagnoses the image forming apparatus 100 based on the read image 81 transmitted from the image forming apparatus 100.

Then, in the present exemplary embodiment, a user who uses the diagnostic system 1 of the present exemplary embodiment, such as a maintenance person who performs maintenance of the image forming apparatus 100, accesses the server apparatus 200. The user refers to the result of the diagnosis performed by the server apparatus 200.

In each of the image forming apparatuses 100, the formed sheet CP is generated in this manner. Then, the formed sheet CP is read, and the read image 81 is generated.

Then, the read image 81 is transmitted to the server apparatus 200.

Then, as described above, in the present exemplary embodiment, the server apparatus 200 diagnoses the image forming apparatus 100 based on the read image 81.

A diagnosis process performed by the server apparatus 200 will be described.

In the present exemplary embodiment, the CPU 11a as an example of a processor provided in the server apparatus 200 diagnoses the image forming apparatus 100.

The CPU 11a diagnoses the image forming apparatus 100 based on the read image 81 transmitted from the image forming apparatus 100, and acquires a diagnostic result.

More specifically, the CPU 11a performs diagnosis based on the formed image 71 included in the read image 81, and acquires a diagnostic result.

The CPU 11a of the server apparatus 200 analyzes the formed image 71 included in the read image 81 in diagnosing the image forming apparatus 100. Then, when an image defect is present in the formed image 71, the CPU 11a specifies the image defect.

Then, the CPU 11a generates an image for notifying the user of the presence of the image defect, as the image for the diagnostic result. This image is displayed on the user terminal 300. Accordingly, the user more clearly recognizes the image defect that the formed image 71 has.

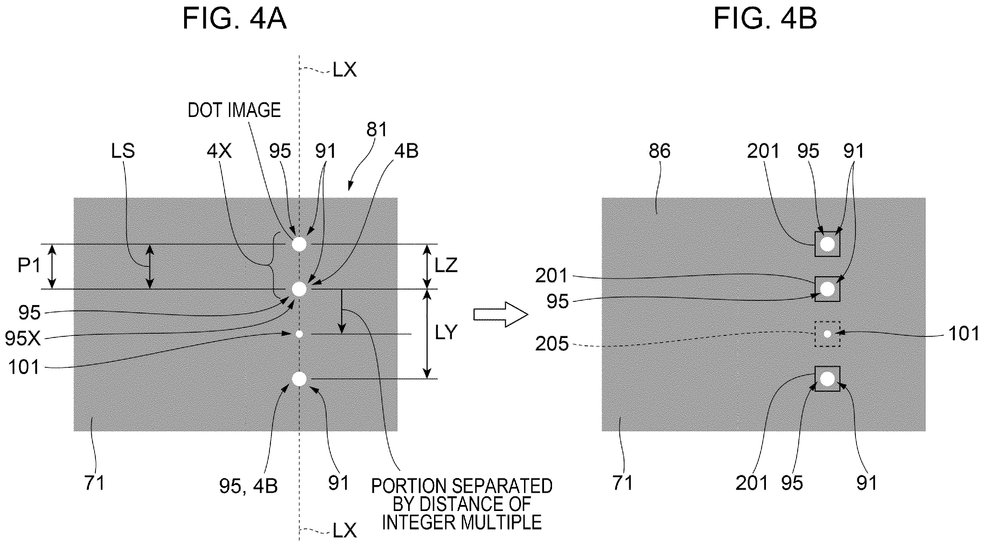

Figs. 4A and 4B are diagrams illustrating a process that is performed on the read image 81 by the CPU 11a of the server apparatus 200.

The CPU 11a performs the process on the read image 81 illustrated in Fig. 4A to form an image illustrated in Fig. 4B. Hereinafter, the image generated by the CPU 11a of the server apparatus 200 based on the read image 81 is referred to as a "generated image 86".

The CPU 11a of the server apparatus 200 first specifies a defect portion 95 that is a portion having an image defect 91 of the formed image 71 included in the read image 81 illustrated in Fig. 4A.

Further, the CPU 11a also specifies a possible portion 101 that is a portion possibly having the image defect 91. The CPU 11a specifies the possible portion 101 based on the specified defect portion 95.

Next, the CPU 11a adds a defect indication image 201 that is an image indicating the position of the defect portion 95, to the read image 81 illustrated in Fig. 4A.

The CPU 11a also adds a position indication image 205 that is an image indicating the position of the possible portion 101, to the read image 81.

Accordingly, the generated image 86 generated by the CPU 11a is an image in which the defect indication image 201 and the position indication image 205 have been added to the read image 81 as illustrated in Fig. 4B.

When the defect indication image 201 is added as in the present exemplary embodiment, a user who uses the diagnostic system 1, such as a maintenance person, is more likely to recognize the image defect 91 present in the formed image 71. When the user recognizes the image defect 91, the user recognizes that a certain malfunction is present in the image forming apparatus 100.

Moreover, as in the present exemplary embodiment, when the position indication image 205 that is an image indicating the position of the possible portion 101 is added, the user's attention to the portion in which the position indication image 205 has been added increases.

When the image defect 91 satisfies a predetermined criterion, such as when the size of the image defect 91 exceeds a predetermined size, the CPU 11a of the server apparatus 200 specifies the image defect 91 as the image defect 91 with which the defect indication image 201 is to be associated.

In this case, the CPU 11a associates the defect indication image 201 with the portion in which the specified image defect 91 is located, and displays the defect indication image 201.

In this case, the defect indication image 201 is not displayed for the image defect 91 having a small size. In this case, the user is likely to overlook the image defect 91 having a small size.

As long as the user may recognize the image defect 91 having a small size, the accuracy of specifying the cause of the image defect 91 may be further improved. When the user overlooks the image defect 91 having a small size, the information provided to the user decreases as a result. In this case, the accuracy of specifying the cause of the image defect 91 performed by the user is likely to deteriorate.

When the position indication image 205 that is the image indicating the position of the possible portion 101 is displayed as in the present exemplary embodiment, the user is likely to notice the image defect 91 having a small size. In this case, the information provided to the user increases, and the accuracy of specifying the cause of the image defect 91 performed by the user is improved.

To give a further description with a specific example, when the user recognizes the image defect 91 having a small size, the user is likely to notice that multiple image defects 91 are periodically generated.

The user is likely to notice that the multiple image defects 91 including the image defect 91 having a small size are arranged at a constant period.

In this case, the user is likely to narrow down the cause of the image defect 91. When the multiple image defects 91 are arranged at a constant period, the image defects 91 are often caused by a rotating member such as the photoreceptor drum 46. In this case, the user is likely to determine that the cause is in any of the rotating members.

The generated image 86 will be further described with reference to Fig. 4B.

In the present exemplary embodiment, the defect indication image 201 and the position indication image 205 are different from each other.

When adding the defect indication image 201 and the position indication image 205 to the read image 81, the CPU 11a makes the defect indication image 201 and the position indication image 205 different from each other.

Specifically, the CPU 11a makes at least one of color and shape different between the defect indication image 201 and the position indication image 205.

In the example illustrated in Fig. 4B, the defect indication image 201 and the position indication image 205 have different shapes. In the example illustrated in Fig. 4B, the shape of the defect indication image 201 and the shape of the position indication image 205 are made different from each other by making the line type of the defect indication image 201 and the line type of the position indication image 205 different from each other.

The defect indication image 201 is an image surrounding the defect portion 95 with a line. The position indication image 205 is also an image surrounding the possible portion 101 with a line.

In the present exemplary embodiment, the line type of the defect indication image 201 and the line type of the position indication image 205 are different from each other.

In the example illustrated in Fig. 4B, the color of the position indication image 205 and the color of the defect indication image 201 are the same.

In one example, the shape of the defect indication image 201 and the shape of the position indication image 205 may be made the same, and the color of the defect indication image 201 and the color of the position indication image 205 may be made different from each other.

In one example, the shape of the defect indication image 201 and the shape of the position indication image 205 may be made different from each other, and further, the color of the defect indication image 201 and the color of the position indication image 205 may be made different from each other.

In one example, when the shape of the defect indication image 201 and the shape of the position indication image 205 are made different from each other, the entire shape of the defect indication image 201 and the entire shape of the position indication image 205 may be made different from each other.

For example, one of the defect indication image 201 and the position indication image 205 may be rectangular, and the other may be circular or elliptical.

In one example, when the shape of the defect indication image 201 and the shape of the position indication image 205 are made different from each other, the thickness of the line defining the defect indication image 201 and the thickness of the line defining the position indication image 205 may be made different from each other.

In one example, the color of the defect indication image 201 may be made different depending on the degree of the image defect 91.

For example, the defect indication image 201 corresponding to the image defect 91 having a large degree is displayed in red. The defect indication image 201 corresponding to the image defect 91 having a small degree is yellow.

Here, a method of specifying the possible portion 101 illustrated in Fig. 4A will be described.

As described above, the CPU 11a specifies the possible portion 101 based on the specified defect portion 95.

Specifically, in the example illustrated in Fig. 4A, the CPU 11a specifies the possible portion 101 in the formed image 71 based on an arrangement interval P1 of multiple specified defect portions 95.

The CPU 11a specifies, as the possible portion 101, a portion that is separated from a defect portion 95 serving as a predetermined reference among the multiple specified defect portions 95 by an integer multiple of the arrangement interval P1.

In the present exemplary embodiment, the CPU 11a first specifies the defect portion 95 before specifying the possible portion 101.

In this example, the CPU 11a specifies, for example, a dot-shaped image having an outer diameter larger than a predetermined threshold value as the image defect 91. Hereinafter, in the present specification, the dot-shaped image is referred to as a "dot image".

The CPU 11a specifies a portion in which the image defect 91 formed of a dot image is present as a defect portion 95. When multiple large dot images are present, the CPU 11a specifies multiple defect portions 95.

For example, when an image defect 91 is caused by a rotating member such as the photoreceptor drum 46, multiple image defects 91 are present. In this case, the CPU 11a specifies multiple defect portions 95.

Next, the CPU 11a determines whether multiple dot images are placed on one imaginary straight line LX along the up-down direction of the read image 81.

Specifically, when, on an imaginary straight line LX passing through one dot image, one or more other dot images are placed, the CPU 11a determines that multiple dot images are placed on one imaginary straight line LX.

In the example illustrated in Fig. 4A, a case where three dot images having outer diameters exceeding a predetermined threshold value are present on the imaginary straight line LX is illustrated. In this case, the CPU 11a determines that multiple dot images are placed on one imaginary straight line LX.

When the CPU 11a determines that multiple dot images are placed on one imaginary straight line LX, the CPU 11a specifies the minimum distance LS among the distances between two dot images that are adjacent to each other.

Then, the CPU 11a specifies the specified minimum distance LS as the "arrangement interval P1" described above.

Then, as described above, the CPU 11a specifies, as the possible portion 101, a portion that is separated from the defect portion 95 serving as the reference by an integer multiple of the arrangement interval P1.

The CPU 11a specifies, as the defect portion 95 serving as the reference, for example, a portion in which a dot image located at the outermost end among multiple dot images sequentially arranged at the minimum distance LS is located.

In the example illustrated in Fig. 4A, the CPU 11a specifies, as the defect portion 95 serving as the reference, a portion in which a dot image indicated by reference sign 4B and located at the lower end among multiple dot images indicated by reference sign 4X and sequentially arranged at the minimum distance LS is located.

In the present specification, the defect portion 95 serving as the reference is hereinafter referred to as a "reference defect portion 95X".

Then, the CPU 11a specifies, as the possible portion 101, a portion that is separated from the reference defect portion 95X by an integer multiple of the arrangement interval P1. More specifically, the CPU 11a specifies, as the possible portion 101, a portion that is separated from the reference defect portion 95X by an integer multiple of the arrangement interval P1 in the extension direction on the straight line LX.

In other words, the CPU 11a specifies, as the possible portion 101, a portion that is separated from the reference defect portion 95X by an integer multiple of the arrangement interval P1 in the arrangement direction of the defect portions 95.

Fig. 4A illustrates a case where a portion that is separated from the reference defect portion 95X by one time the arrangement interval P1 is specified as the possible portion 101.

Here, in the example illustrated in Fig. 4A, a small dot image is present in the possible portion 101. The outer diameter of the small dot image is smaller than the predetermined threshold value.

In this case, the small dot image is not specified as the image defect 91. In this case, the defect indication image 201 corresponding to the small dot image is not displayed.

In one example, each of all the portions separated by an integer multiple of the arrangement interval P1 may be specified as the possible portion 101.

That is, all the portions specified when the value of the integer is sequentially increased, such as a portion separated by one time the arrangement interval P1, a portion separated by two times the arrangement interval P1, and a portion separated by three times the arrangement interval P1, may be specified as the possible portions 101.

In this case, the position indication image 205 is displayed in each of all the portions specified as the possible portions 101.

In one example, in the present exemplary embodiment, a portion overlapping the defect portion 95 among portions separated by an integer multiple of the arrangement interval P1 is not specified as the possible portion 101.

For example, in the example illustrated in Fig. 4A, a portion separated by two times the arrangement interval P1 and the defect portion 95 indicated by reference sign 4B overlap each other. In this case, the portion separated by two times the arrangement interval P1 is not specified as the possible portion 101.

In the above description, the portion in which the dot image located at the lower end among the multiple dot images is located is specified as the reference defect portion 95X. The case where the position indication image 205 is displayed below the reference defect portion 95X has been described.

In one example, the position indication image 205 may be displayed above the reference defect portion 95X.

Also in this case, a portion that is separated from the reference defect portion 95X by an integer multiple of the arrangement interval P1 is specified as the possible portion 101 as in the above case. In this case, a portion overlapping the defect portion 95 among portions separated by an integer multiple of the arrangement interval P1 is not specified as the possible portion 101.

The reference defect portion 95X is not particularly limited. For example, a portion in which a dot image located at the upper end among the multiple dot images is located may be specified as the reference defect portion 95X.

Without being limited to the portion in which the dot image located at the lower end or the upper end is located, in one example, any portion may be specified as the reference defect portion 95X as long as the portion is a portion in which a dot image located on the imaginary straight line LX is located.

Also in this case, a portion that is separated from the reference defect portion 95X by an integer multiple of the arrangement interval P1 and does not overlap the defect portion 95 is specified as the display position of the position indication image 205 as in the above case.

In one example, the CPU 11a of the server apparatus 200 may perform the process of specifying the possible portion 101 and the process of adding the position indication image 205 when three or more dot images are present on one common straight line LX.

In this case, when two dot images are present on one common straight line LX, the CPU 11a does not perform the process of specifying the possible portion 101 and the process of adding the position indication image 205.

In the present exemplary embodiment, the possible portion 101 is specified on the premise that the dot images are periodically generated. When there are two dot images, a situation in which the process of specifying the possible portion 101 and the process of adding the position indication image 205 are performed under a situation in which the dot images are not periodically generated is likely to occur.

When the presence of three or more dot images is used as the condition for performing the process of specifying the possible portion 101, it may be further determined whether the three or more dot images are periodically generated.

Then, when it is determined that the three or more dot images are periodically generated, the process of specifying the possible portion 101 and the process of adding the position indication image 205 may be performed.

To determine whether the dot images are periodically generated, the CPU 11a determines whether each of the intervals between the dot images adjacent to each other is an integer multiple of the minimum distance LS.

In determining whether the dot images are periodically generated, the CPU 11a first specifies the minimum distance LS.

Next, the CPU 11a determines whether each of the intervals between the dot images adjacent to each other is an integer multiple of the minimum distance LS.

When each of the intervals between the dot images adjacent to each other is an integer multiple of the minimum distance LS, the CPU 11a determines that the dot images are periodically generated.

In contrast, when at least one of the intervals between the dot images adjacent to each other is not an integer multiple of the minimum distance LS, the CPU 11a determines that the dot images are not periodically generated.

In the example illustrated in Fig. 4A, the interval indicated by reference sign LY is two times the minimum distance LS. The interval indicated by reference sign LZ is one time the minimum distance LS.

In this case, the CPU 11a determines that the three large dot images illustrated in Fig. 4A are periodically generated. Then, in this case, the CPU 11a performs the process of specifying the possible portion 101 and the process of adding the position indication image 205.

When three or more dot images are present and the three dot images are periodically generated, the possibility that the image defect 91 having periodicity occurs is higher than that in a case where two dot images are present.

When the position indication image 205 is displayed in the case where three or more dot images are present and the three dot images are periodically generated, the accuracy of display of the position indication image 205 is improved.

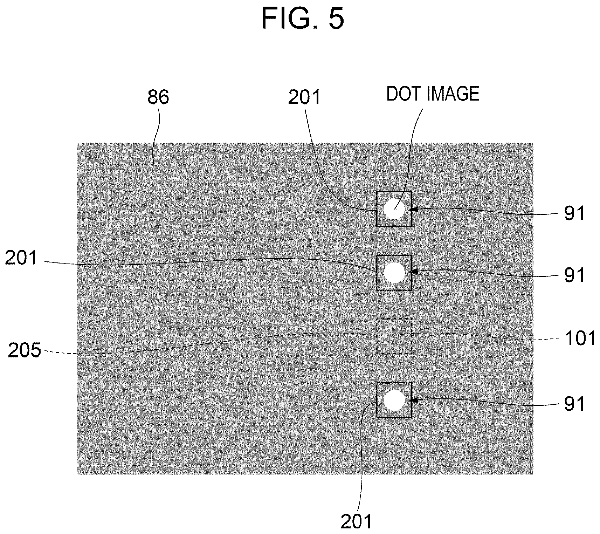

Fig. 5 is a diagram illustrating another example of the generated image 86.

Also in this example, a position indication image 205 is displayed in the same portion as the display portion of the position indication image 205 illustrated in Fig. 4B. The position indication image 205 is displayed in association with the possible portion 101 as described above.

In this example, a dot image is not present in the possible portion 101.

In the present exemplary embodiment, even when a dot image is not present, the position indication image 205 is displayed.

In the present exemplary embodiment, whether to display the position indication image 205 is determined not based on the state in the display portion of the position indication image 205. In the present exemplary embodiment, whether to display the position indication image 205 is determined based on whether an image defect 91 is present.

Thus, as illustrated in Fig. 5, even when a dot image is not present in the display portion of the position indication image 205, the position indication image 205 is displayed.

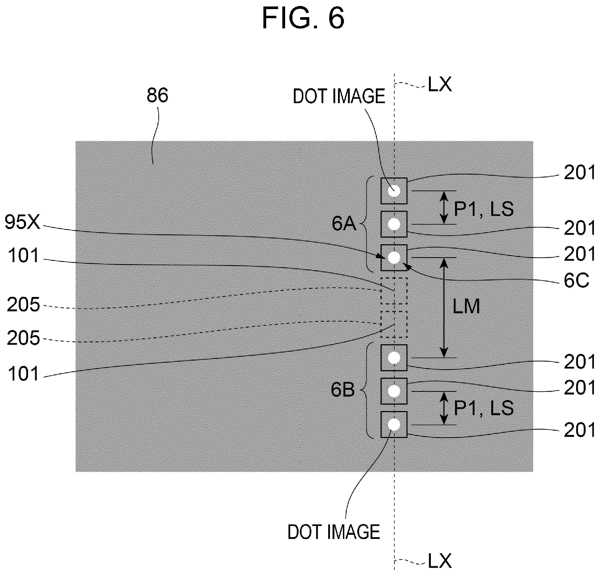

Fig. 6 is a diagram illustrating still another example of the generated image 86.

In the example illustrated in Fig. 6, six dot images are present on one common straight line LX extending in the up-down direction. In this example, in three dot images indicated by reference sign 6A and located on the upper side, the arrangement interval P1 of the three dot images is the minimum distance LS.

Moreover, in this example, also in three dot images indicated by reference sign 6B and located on the lower side, the arrangement interval P1 of the three dot images is the minimum distance LS.

Further, in this example, an interval LM between the three dot images indicated by reference sign 6A and located on the upper side and the three dot images indicated by reference sign 6B and located on the lower side is three times the minimum distance LS.

In this example, the CPU 11a causes two position indication images 205 to be displayed between the three dot images indicated by reference sign 6A and located on the upper side and the three dot images indicated by reference sign 6B and located on the lower side.

In this example, the CPU 11a specifies, as the reference defect portion 95X, for example, a portion in which a dot image indicated by reference sign 6C is located.

Then, in this example, the CPU 11a specifies, as the possible portion 101, a portion that is separated from the defect portion 95 serving as the reference by one time the arrangement interval P1. In other words, the CPU 11a specifies, as the possible portion 101, a portion that is separated from the defect portion 95 serving as the reference by one time the minimum distance LS.

Moreover, in this example, the CPU 11a specifies, as the possible portion 101, a portion that is separated from the reference defect portion 95X by two times the arrangement interval P1.

Also in the example illustrated in Fig. 6, multiple dot images are present in a state of having periodicity.

Also in the example illustrated in Fig. 6, each of the intervals between the dot images adjacent to each other is an integer multiple of the minimum distance LS. Specifically, in the example illustrated in Fig. 6, each of the intervals between the dot images adjacent to each other is one time or three times the minimum distance LS.

Also in the example illustrated in Fig. 6, the CPU 11a determines that the multiple dot images are present in the state of having periodicity.

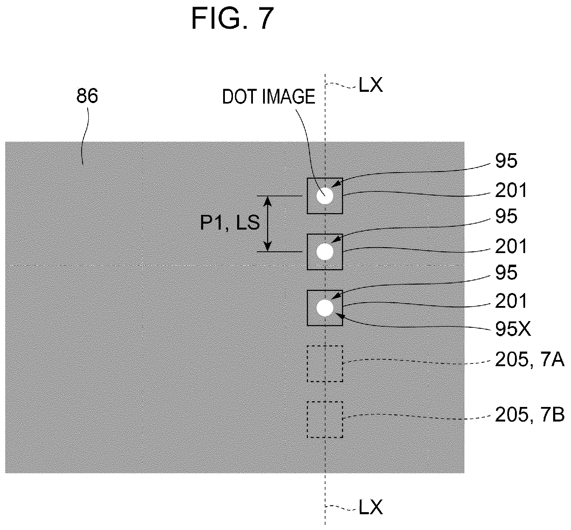

Fig. 7 is a diagram illustrating yet another example of the generated image 86.

In this example, three dot images having outer diameters larger than a predetermined threshold value are present on one common straight line LX extending in the up-down direction.

In this example, in the three dot images, the arrangement interval P1 of the dot images in a relationship of being adjacent to each other is the minimum distance LS.

Fig. 7 illustrates a case where a position indication image 205 is displayed below the three dot images.

In this example, a position indication image 205 indicated by reference sign 7A is displayed in a portion that is separated from the reference defect portion 95X by one time the arrangement interval P1. Moreover, a position indication image 205 indicated by reference sign 7B is displayed in a portion that is separated from the reference defect portion 95X by two times the arrangement interval P1.

In any of the examples illustrated in Figs. 4A to 6, the case where the position indication image 205 is arranged between the defect portions 95 is illustrated as an example. Without being limited to this, as illustrated in Fig. 7, the position indication image 205 may be displayed in a portion outside the area between the defect portions 95.

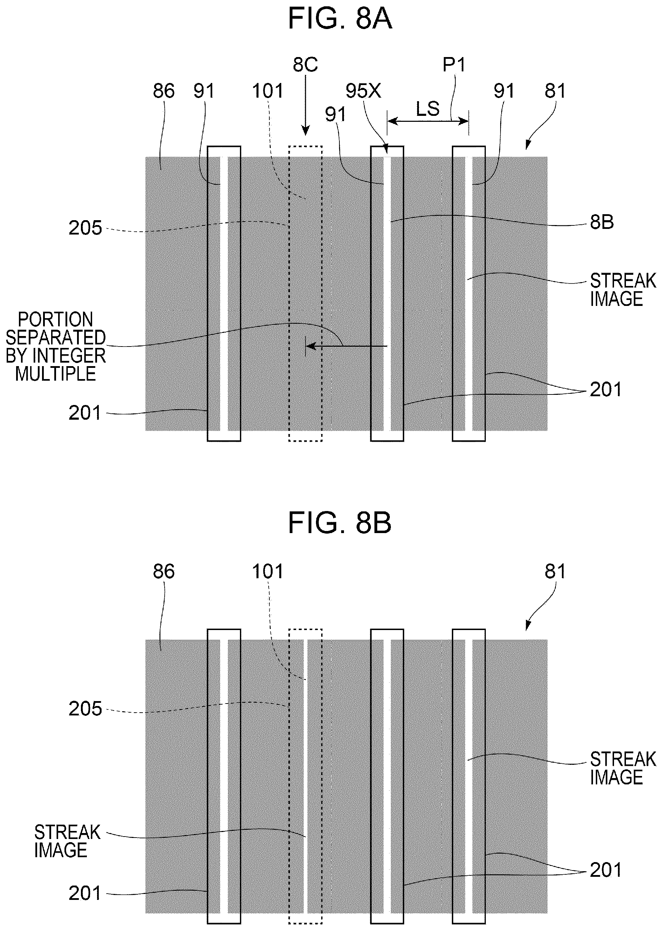

Figs. 8A and 8B are diagrams illustrating further examples of the generated image 86.

In the above description, the case where the possible portion 101 is specified based on the multiple dot images arranged in the up-down direction of the read image 81 has been described as an example.

The image defect 91 that is the basis for specifying the possible portion 101 is not limited to the dot image. The direction in which the image defects 91 are arranged is not limited to the up-down direction.

In Fig. 8A, a streak image that is a streak-like image extending in the up-down direction serves as an image defect 91. Image defects 91 are present side by side in the left-right direction of the read image 81.

Also in this case, the CPU 11a specifies the minimum distance LS among the distances between the streak images in the relationship of being adjacent to each other as in the above case. Then, the CPU 11a specifies the specified minimum distance LS as the arrangement interval P1 of the streak images.

Next, the CPU 11a specifies, as the possible portion 101, a portion that is separated from the reference defect portion 95X by an integer multiple of the arrangement interval P1 as in the above case.

The CPU 11a specifies, as the reference defect portion 95X, for example, a portion in which a streak image located at the outermost end among multiple streak images sequentially arranged at the minimum interval is located is specified as in the above case.

In Fig. 8A, the CPU 11a specifies, as the reference defect portion 95X, a portion in which a streak image indicated by reference sign 8B is located.

Then, the CPU 11a specifies, as the possible portion 101, a portion that is separated from the reference defect portion 95X by an integer multiple of the arrangement interval P1.

In the example illustrated in Fig. 8A, the CPU 11a specifies, as the possible portion 101, a portion indicated by reference sign 8C and separated by one time the arrangement interval P1.

The image defect 91 is present in a portion separated from the image defect 91 by two times the arrangement interval P1. Thus, in this example, the CPU 11a does not specify the portion separated by two times the arrangement interval P1 as the possible portion 101.

Then, the CPU 11a adds the position indication image 205 to the specified portion. Accordingly, also in this case, the position indication image 205 is displayed in the possible portion 101.

In the example illustrated in Fig. 8A, a streak image is not present in the portion specified as the possible portion 101. In the present exemplary embodiment, also in this case, the position indication image 205 is added.

Fig. 8B illustrates a case where a streak image is present in the portion specified as the possible portion 101.

The streak image is a streak image whose width is smaller than a predetermined threshold value and that is not recognized as the image defect 91. In this case, the defect indication image 201 is not displayed.

In the present exemplary embodiment, the position indication image 205 is displayed instead of the defect indication image 201.

In the examples illustrated in Figs. 8A and 8B, when three or more streak images are present, the process of specifying the possible portion 101 and the process of adding the position indication image 205 may be performed as in the above case.

Whether multiple streak images have periodicity may be determined as in the above case.

Then, when it is determined that there is periodicity, the process of specifying the possible portion 101 and the process of adding the position indication image 205 may be performed.

When it is determined that three or more streak images are present and have periodicity, the process of specifying the possible portion 101 and the process of adding the position indication image 205 may be performed.

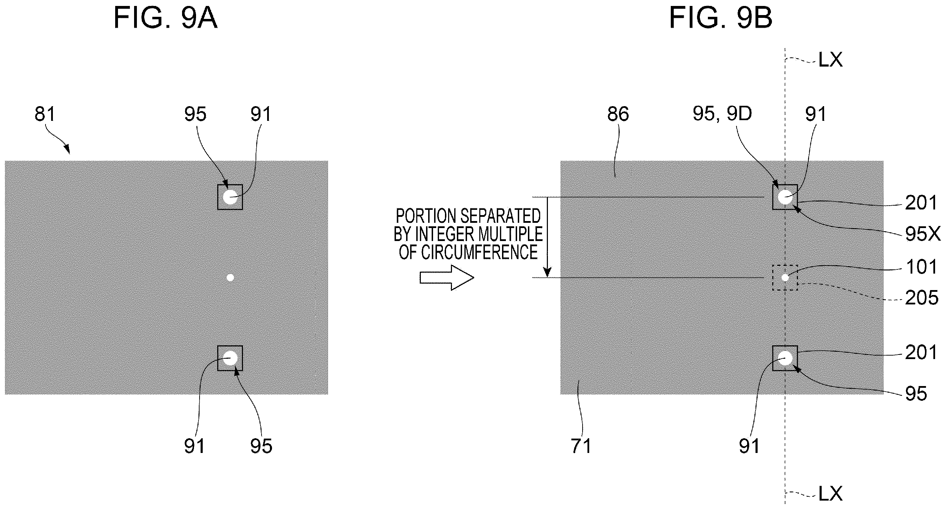

Figs. 9A and 9B are diagrams illustrating another example of a method of specifying a possible portion 101.

In the example illustrated in Figs. 9A and 9B, the CPU 11a specifies a possible portion 101 illustrated in Fig. 9B based on a specified defect portion 95 (see Fig. 9A) and component information that is information about a constituent component that is a component included in the image forming apparatus 100.

More specifically, in this example, the CPU 11a acquires information about the circumferential length of a constituent component that rotates as the component information. For example, the CPU 11a acquires 20 mm or 30 mm as the circumferential length.

In the image forming apparatus 100, the information about the circumferential length of the constituent component that is included in the image forming apparatus 100 and rotates is registered in the secondary storage 12 illustrated in Fig. 2.

The CPU 11a reads and acquires the information about the circumferential length from the secondary storage 12.

Specifically, the CPU 11a acquires, for example, information about the circumferential length of the photoreceptor drum 46 as the component information.

The CPU 11a then specifies the possible portion 101 in the formed image 71 based on the specified defect portion 95 and this information about the circumferential length of the constituent component that rotates.

More specifically, the CPU 11a specifies, as the possible portion 101, a portion that is separated from a predetermined reference defect portion 95X among multiple specified defect portions 95 by an integer multiple of the circumferential length.

In Figs. 9A and 9B, the predetermined reference defect portion 95X is a defect portion 95 indicated by reference sign 9D illustrated in Fig. 9B.

The CPU 11a specifies, as the possible portion 101, a portion that is separated from the defect portion 95 serving as the reference by an integer multiple of the circumferential length.

In Fig. 9B, the possible portion 101 specified by the CPU 11a is displayed.

In this example, the possible portion 101 is specified by the CPU 11a. In this example, the position indication image 205 is displayed in the possible portion 101 as in the above case.

A dot image is present in the display portion of the position indication image 205. The dot image is smaller than a predetermined outer diameter. Thus, in this example, the dot image is not specified as an image defect 91.

Also in this example, as illustrated in Fig. 9B, multiple defect portions 95 are located on one common imaginary straight line LX. As illustrated in Fig. 9B, the reference defect portion 95X is one defect portion 95 among the multiple defect portions 95 located on the common imaginary straight line LX.

The cause of the image defect 91 having periodicity is often a rotating member such as the photoreceptor drum 46. In the example illustrated in Figs. 9A and 9B, the possible portion 101 is specified based on information about the rotating member that causes the image defect 91.

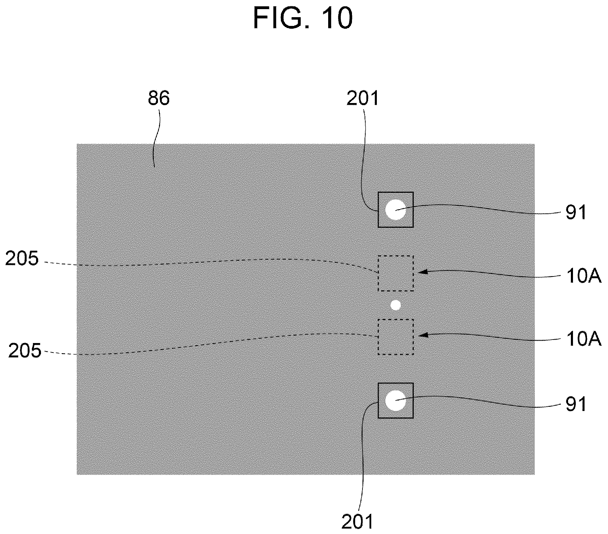

Fig. 10 illustrates a still further example of the generated image 86.

Another example of the component information is information about the circumferential length of the developing roller 49A illustrated in Fig. 3.

In the present exemplary embodiment, the circumferential length of the developing roller 49A is smaller than the circumferential length of the photoreceptor drum 46.

In this case, when the information about the circumferential length of the developing roller 49A is used as the component information, the position indication image 205 is displayed, for example, at a position indicated by reference sign 10A in Fig. 10. In this example, two position indication images 205 are displayed.

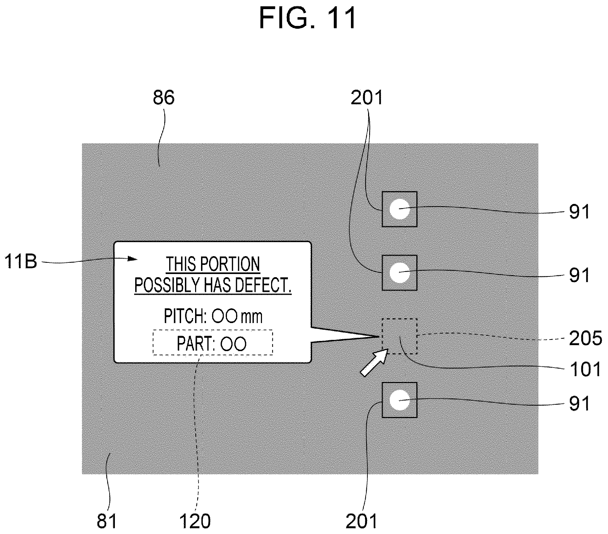

Fig. 11 illustrates a yet further example of the generated image 86.

In the generated image 86, the defect indication image 201 is added as in the above case to the read image 81 obtained by reading the formed sheet CP as in the above case. Further, the position indication image 205 is added to the read image 81.

Further, in the generated image 86, cause information 120 that is information about the cause of a defect that the possible portion 101 possibly has, has been added.

When the generated image 86 illustrated in Fig. 11 is generated, the CPU 11a specifies the cause of the image defect 91 based on the specified image defect 91.

For example, when the image defect 91 is a dot image that occurs periodically, the CPU 11a specifies that the cause of the image defect 91 is a rotating member such as the photoreceptor drum 46.

Then, the CPU 11a causes information about the specified rotating member to be included in the generated image 86.

In the example illustrated in Fig. 11, the information about the specified rotating member is included in the generated image 86 as the cause information 120 that is the information about the cause of the defect that the possible portion 101 possibly has.

In this example, the cause information 120 that is the information about the cause of the defect that the possible portion 101 possibly has is generated based on the image defect 91 that is actually occurring.

More specifically, in this example, the CPU 11a generates the cause information 120 based on the interval of image defects 91 that are actually occurring and the information about the circumferential length described above.

For example, when the interval of the image defects 91 that are actually occurring is the same as the circumferential length of the photoreceptor drum 46, the CPU 11a generates information on the photoreceptor drum 46 as the cause information 120.

The cause information 120 may be constantly displayed.

In one example, the cause information 120 may be displayed when the user has selected the position indication image 205 or the possible portion 101.

Specifically, the cause information 120 may be displayed when a cursor has overlapped the position indication image 205 or the possible portion 101, or when the position indication image 205 or the possible portion 101 has been clicked. Fig. 11 illustrates a display example in a case where a cursor has overlapped.

In one example, as indicated by reference sign 11B in Fig. 11, information indicating that there is a possibility of the presence of a defect is displayed in a form corresponding to the possible portion 101.

In one example, the cause information 120 may be displayed in association with the image defect 91. In Fig. 11, the cause information 120 is displayed in association with the possibility information. Without being limited thereto, the cause information 120 may be displayed in association with the image defect 91.

Also in this case, the cause information 120 may be always displayed. In one example, the cause information 120 may be displayed when the user has selected the defect indication image 201 or the image defect 91.

In one example, the cause information 120 may be displayed in association with the image defect 91, and further the cause information 120 may be displayed in association with the position indication image 205.

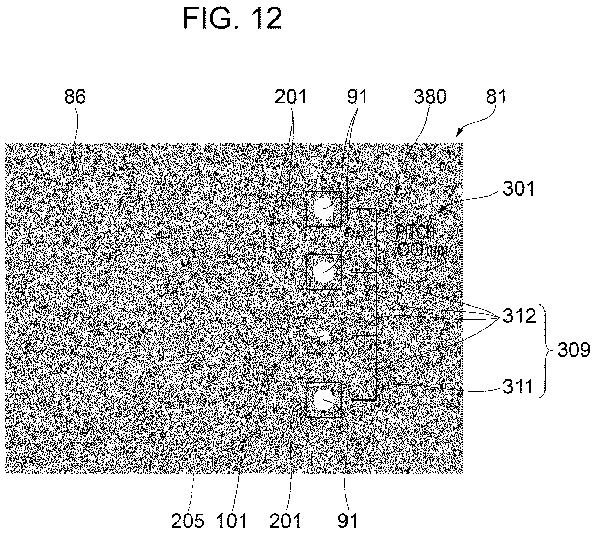

Fig. 12 is a diagram illustrating a yet further example of the generated image 86.

In this example illustrated in Fig. 12, in addition to the defect indication image 201 and the position indication image 205, an image 380 indicating the arrangement interval between the defect indication image 201 and the position indication image 205 is displayed.

Hereinafter, in the present specification, the image indicating the arrangement interval is referred to as an "interval indication image 380".

In the interval indication image 380, an image 301 indicating the size of the interval between image defects 91 adjacent to each other is displayed.

Further, a graphic image 309 formed of a line drawing is displayed as a portion of the interval indication image 380.

The graphic image 309 includes a linear first image 311 extending in the up-down direction of the read image 81 and multiple linear second images 312 extending in the left-right direction of the read image 81.

Each of the second images 312 is provided in a form associated with any one of the defect indication image 201 and the position indication image 205.

Each of the second images 312 is connected to the first image 311. The second image 312 extends from a connection portion with the first image 311 toward the defect indication image 201 or the position indication image 205.

In the display example illustrated in Fig. 12, the user more easily recognizes that the defect indication image 201 and the position indication image 205 are arranged at a constant period.

Further, the user recognizes the specific period of the image defect 91 by referring to the image 301 indicating the size of the interval of the image defect 91.

In this case, the user specifies, for example, that the cause of the image defect 91 is the photoreceptor drum 46 or the developing roller 49A based on the period.

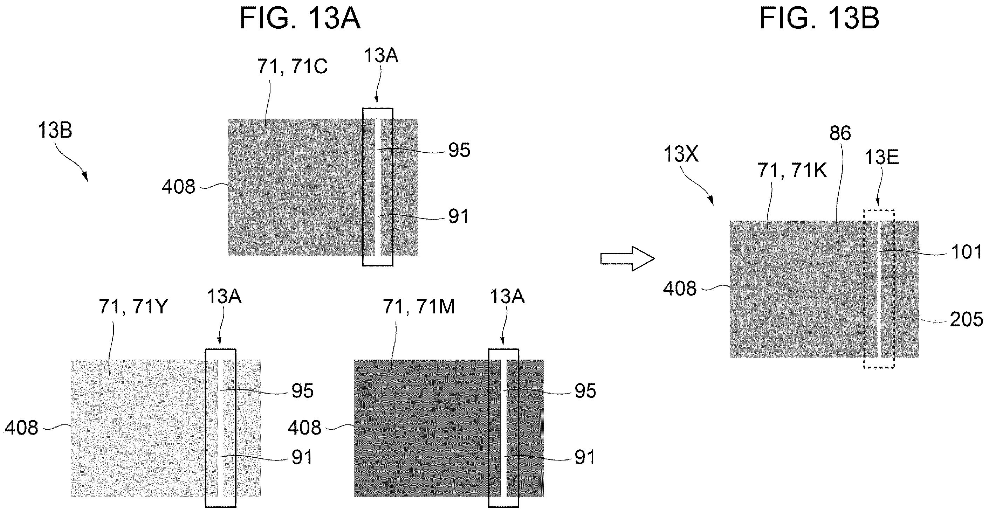

Figs. 13A and 13B are diagrams illustrating a yet further example of the generated image 86.

In Fig. 13B, an image indicated by reference sign 13X indicates a generated image 86 generated by the CPU 11a. In the generated image 86, a possible portion 101 is specified, and a position indication image 205 is displayed in association with the possible portion 101.

In contrast, three images indicated by reference sign 13B in Figs. 13A are formed images 71 used for generating the generated image 86.

In this process, the CPU 11a specifies a possible portion 101 for another formed image 71 indicated by reference sign 13X based on a defect portion 95 of each of the three formed images 71 indicated by reference sign 13B.

Without being limited thereto, the CPU 11a may specify the possible portion 101 for the other formed image 71 indicated by reference sign 13X based on the defect portion 95 of one formed image 71 among the three formed images 71 indicated by reference sign 13B.

In each of the processes described above, the possible portion 101 in one formed image 71 is specified based on the defect portion 95 in the one formed image 71.

In contrast, in this example illustrated in Figs. 13A and 13B, a possible portion 101 in another formed image 71 different from the one formed image 71 is specified based on the defect portion 95 in the one formed image 71.

In the example illustrated in Figs. 13A and 13B, the three formed images 71 indicated by reference sign 13B that serve as the basis for specifying the image defect 91 are different from the formed image 71 indicated by reference sign 13X in which the position indication image 205 is added.

In this example, all of the four formed images 71 illustrated in Figs. 13A and 13B are formed images 71 formed by the image forming apparatus 100.

A formed image 71Y of the four formed images is a formed image 71 formed by the first image forming unit 40Y that forms a yellow image illustrated in Fig. 3. Hereinafter, the formed image 71Y is referred to as a "yellow formed image 71Y".

A formed image 71M is a formed image 71 formed by the second image forming unit 40M that forms a magenta image. Hereinafter, the formed image 71M is referred to as a "magenta formed image 71M".

A formed image 71C is a formed image 71 formed by the third image forming unit 40C that forms a cyan image. Hereinafter, the formed image 71C is referred to as a "cyan formed image 71C".

A formed image 71K is a formed image 71 formed by the fourth image forming unit 40K that forms a black image. Hereinafter, the formed image 71K is referred to as a "black formed image 71K".

In this example, the CPU 11a determines whether each of the yellow formed image 71Y, the magenta formed image 71M, the cyan formed image 71C, and the black formed image 71K has a common image defect 91.

Then, when one or some of the formed images 71 do not have the common image defect 91, the CPU 11a adds the position indication image 205 to the one or some of formed images 71.

When the one or some of the formed images 71 do not have the common image defect 91, the CPU 11a specifies the position of the common image defect 91 in the formed image 71 having the common image defect 91. Hereinafter, in the present specification, this position may be referred to as a "defect position".

Then, the CPU 11a causes the position indication image 205 to be added to a position corresponding to the specified defect position in the one or some of the formed images 71 not having the common image defect 91.

In the example illustrated in Figs. 13A and 13B, the CPU 11a first specifies a defect position that is the position of the common image defect 91 in the yellow formed image 71Y, the magenta formed image 71M, and the cyan formed image 71C having the common image defect 91.

Then, the CPU 11a adds the position indication image 205 to the position corresponding to the specified defect position in the black formed image 71K.

Accordingly, as indicated by reference sign 13X, the generated image 86 in which the position indication image 205 has been added to the black formed image 71K is generated.

In this example, the CPU 11a specifies a portion indicated by reference sign 13A in the yellow formed image 71Y, the magenta formed image 71M, and the cyan formed image 71C, as a defect portion 95 that is a portion having a defect.

In this example, the CPU 11a specifies a possible portion 101 in the black formed image 71K based on the specified defect portion 95.

The CPU 11a specifies a possible portion 101 for another formed image 71 different from the formed images 71 in which the defect portion 95 is present based on the specified defect portion 95.

Then, the CPU 11a adds the position indication image 205 to the specified possible portion 101, and generates the generated image 86 indicated by reference sign 13X in which the position indication image 205 has been added.

The generated image 86 indicated by reference sign 13X is the image in which the position indication image 205 indicating the position of the possible portion 101 has been added to the black formed image 71K.

Here, a method of specifying the possible portion 101 in the black formed image 71K will be described.

The CPU 11a specifies a possible portion 101 in the black formed image 71K based on the position of a defect portion 95 in the yellow formed image 71Y, the magenta formed image 71M, and the cyan formed image 71C.

Specifically, the CPU 11a first specifies a relative reference position that is the position of the defect portion 95 in the yellow formed image 71Y, the magenta formed image 71M, and the cyan formed image 71C, and is a relative position of the defect portion 95 with respect to a reference position 408.

An example of the reference position 408 is a side located on the left among four sides of each of the yellow formed image 71Y, the magenta formed image 71M, and the cyan formed image 71C.

The reference position 408 is not limited to the side, and may be another side.

In one example, any one of the four corners of each of the yellow formed image 71Y, the magenta formed image 71M, and the cyan formed image 71C may serve as the reference position 408.

Then, the CPU 11a specifies the possible portion 101 in the black formed image 71K based on the specified relative reference position and the reference position 408 of the black formed image 71K.

Here, as the reference position 408 of the black formed image 71K, for example, the left side of the black formed image 71K is exemplified as in the above case.

Accordingly, in the present exemplary embodiment, a portion indicated by reference sign 13E of the black formed image 71K is specified as the possible portion 101.

Thereafter, the CPU 11a adds the position indication image 205 to the possible portion 101. Accordingly, the generated image 86 indicated by reference sign 13X is generated.

Here, for example, when a scratch is present on the outer peripheral surface of the intermediate transfer belt 41 illustrated in Fig. 3, there is a concern that the scratch may cause a scratch on the photoreceptor drum 46 provided in each image forming unit 40.

In this case, an image defect 91 is likely to occur in each of formed images 71 formed by the four photoreceptor drums 46.

The degree of the image defect 91 in the formed image 71 is not uniform, and the degree of the image defect 91 is small in the formed image 71 corresponding to one or some of the photoreceptor drums 46 in a state with a small scratch.

In this case, a situation may occur in which the image defect 91 is not specified in the formed image 71 formed using the one or some of the photoreceptor drums 46. In this case, it is difficult for the user to recognize that a malfunction is occurring in the one or some of the photoreceptor drums 46.

In contrast, in the present exemplary embodiment, the position indication image 205 is added to the formed image 71 formed based on the one or some of the photoreceptor drums 46. Accordingly, the possibility that the user recognizes that a malfunction is occurring in the one or some of the photoreceptor drums 46 increases.

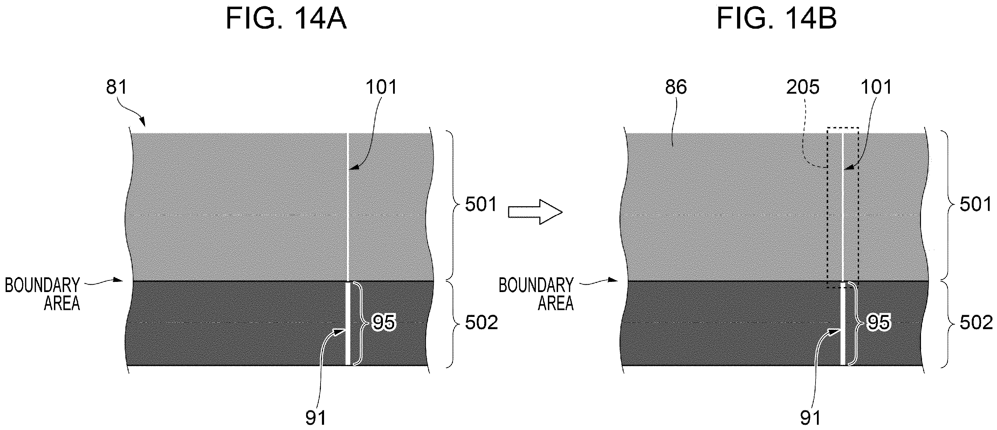

Figs. 14A and 14B are diagrams illustrating another example of a process.

In Fig. 14A, the boundary area of a read image 81 obtained by the image reading device 130 reading the formed sheet CP is enlarged. Fig. 14A illustrates in an enlarged manner the boundary area between a sheet read area 501 and a background area 502.

The sheet read area 501 is an area of the read image 81 obtained by reading the formed sheet CP. The background area 502 is an area of the read image 81 obtained by reading an area other than the formed sheet CP.

The background area 502 refers to an area of the read image 81 obtained based on an output from the light receiver when the sheet P is not located at a position facing the light receiver provided in the image reading device 130.

In the present exemplary embodiment, a facing member (not illustrated) is provided at a position facing the light receiver. The background area 502 is also referred to as an area obtained by reading this facing member.

In the present exemplary embodiment, when the image reading device 130 reads the formed sheet CP, the formed sheet CP passes between the facing member and the light receiver.

When the formed sheet CP is located between the facing member and the light receiver, the light receiver reads the formed sheet CP. In this case, the sheet read area 501 is obtained.

When the formed sheet CP is not located between the facing member and the light receiver, the light receiver reads the facing member. In this case, the background area 502 is obtained.

In the read image 81, the background area 502 is located outside the sheet read area 501. The shape of the sheet read area 501 is rectangular. The background area 502 is located outside the outer peripheral edge of the rectangular sheet read area 501.

In this example, the read image 81 includes the background area 502, and the read image 81 includes the sheet read area 501 and the background area 502.

In this process example, the CPU 11a also specifies a defect portion 95 that is a portion having an image defect 91 of the read image 81 illustrated in Fig. 14A.

Then, the CPU 11a specifies a possible portion 101 that is a portion possibly having a defect of the read image 81 based on the specified defect portion 95.

Also in this process example, the CPU 11a specifies, as the defect portion 95, a portion in which a specific image included in the read image 81 is located.

In this process example, the CPU 11a specifies, as the defect portion 95, a portion in which a specific image located in the background area 502 of the read image 81 is located.

More specifically, in this example, the CPU 11a specifies, as the defect portion 95, a portion in which a streak-like image located in the background area 502 is located.

In other words, the CPU 11a specifies, as the defect portion 95, a portion in which a streak-like image is located outside the sheet read area 501.

In this example, a streak-like image is the image defect 91, and a portion in which the streak-like image is located is specified as the defect portion 95.

The CPU 11a specifies the background area 502 located outside the sheet read area 501 based on the contrast in the read image 81.

Normally, there is a difference between the density value of the sheet read area 501 and the density value of the background area 502. The CPU 11a specifies the background area 502 located outside the sheet read area 501 based on the difference in the density value.

Further, the CPU 11a determines whether a predetermined image defect 91 such as a streak-like image is present in the background area 502.

When determining that the image defect 91 is present in the background area 502, the CPU 11a specifies the possible portion 101 from the sheet read area 501 based on the defect portion 95 in which the image defect 91 is located.

Specifically, the CPU 11a specifies, as the possible portion 101, a portion of the sheet read area 501 located on an extension line of the streak-like image.

Thereafter, the CPU 11a adds the position indication image 205 to the portion of the sheet read area 501 in which the possible portion 101 is located.

Accordingly, as illustrated in Fig. 14B, the generated image 86 in which the position indication image 205 has been added is generated.

The streak-like image defect 91 is caused by, for example, a contamination on a portion of the light receiver or a contamination on a portion of the light source.

Even when the light receiver or the like is contaminated, the width of the streak-like image is reduced depending on the degree of contamination. In this case, as illustrated in Fig. 14A, the width of the streak-like image becomes small in the sheet read area 501.

In this case, it is determined that the image defect 91 is not present in the sheet read area 501. In this case, the defect indication image 201 is not added to the sheet read area 501.

In this case, the user is less likely to notice a streak-like image slightly generated in the sheet read area 501. In this case, the user is less likely to notice that a malfunction occurs in any of the apparatuses.

In contrast, in the present exemplary embodiment, the position indication image 205 is displayed in correspondence with the streak-like image slightly generated in the sheet read area 501. In this case, the user recognizes that a malfunction is occurring in any of the apparatuses.

In the example illustrated in Figs. 14A and 14B, the user recognizes that a malfunction is occurring in the image reading device 130 by referring to the streak-like image located in the background area 502.

The present disclosure has been described above. The present disclosure is also applicable to a program and a program product.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing system comprising:
   a processor configured to:
   specify a defect portion that is a portion having a defect of a formed image that is an image formed by an image forming apparatus; and
   specify a possible portion that is a portion possibly having a defect of the formed image or another image formed by the image forming apparatus, based on the specified defect portion.
(((2))) The information processing system according to (((1))),
   wherein the processor is configured to:
   further generate an image in which a position indication image that is an image indicating a position of the possible portion has been added to a read image obtained by reading the formed image; and
   further generate an image in which the position indication image has been added to a read image obtained by reading the other image.
(((3))) The information processing system according to (((1))),
   wherein the processor is configured to:
   further generate an image in which a position indication image that is an image indicating a position of the possible portion and cause information that is information about a cause of the defect that the possible portion possibly has have been added to a read image obtained by reading the formed image; and
   further generate an image in which the position indication image that is the image indicating the position of the possible portion and the cause information that is the information about the cause of the defect that the possible portion possibly has have been added to a read image obtained by reading the other image.
(((4))) The information processing system according to (((1))), wherein the processor is configured to further generate an image in which a position indication image that is an image indicating a position of the possible portion and a defect indication image that is an image indicating a position of the defect portion have been added to a read image obtained by reading the formed image.
(((5))) The information processing system according to (((4))), wherein the position indication image and the defect indication image are different from each other.
(((6))) The information processing system according to (((5))), wherein at least one of a color and a shape is different between the position indication image and the defect indication image.
(((7))) The information processing system according to (((6))),
   wherein the position indication image is an image surrounding the possible portion with a line,
   wherein the defect indication image is an image surrounding the defect portion with a line, and
   wherein a line type of the position indication image and a line type of the defect indication image are different from each other.
(((8))) The information processing system according to (((1))), wherein the specified defect portion includes a plurality of specified defect portions, and the processor is configured to specify the possible portion in the formed image based on an arrangement interval of the plurality of specified defect portions.
(((9))) The information processing system according to (((8))), wherein the processor is configured to specify, as the possible portion, a portion separated from a defect portion serving as a predetermined reference among the plurality of specified defect portions by an integer multiple of the arrangement interval.
(((10))) The information processing system according to (((1))), wherein the processor is configured to specify the possible portion in the other image based on a position of the defect portion in the formed image.
(((11))) The information processing system according to (((10))),
   wherein the processor is configured to:
   specify a relative reference position that is a position of the defect portion in the formed image and is a relative position of the defect portion with respect to a reference position of the formed image; and
   specify the possible portion in the other image based on a reference position of the other image and the relative reference position.
(((12))) The information processing system according to (((1))), wherein the processor is configured to specify the possible portion in the formed image based on the specified defect portion and component information that is information about a constituent component that is a component included in the image forming apparatus.
(((13))) The information processing system according to (((12))), wherein the processor is configured to specify the possible portion in the formed image based on the specified defect portion and information about a circumferential length of the constituent component that rotates.
(((14))) The information processing system according to (((13))), wherein the specified defect portion includes a plurality of specified defect portions, and the processor is configured to specify, as the possible portion, a portion separated from a defect portion serving as a predetermined reference among the plurality of specified defect portions by an integer multiple of the circumferential length.
(((15))) An information processing system comprising:
   a processor configured to:
   specify a defect portion that is a portion having a defect of a read image that is an image obtained by a reading device reading a recording material; and
   specify a possible portion that is a portion possibly having a defect of the read image, based on the specified defect portion.
(((16))) The information processing system according to (((15))),
   wherein the processor is configured to:
   specify, as the defect portion, a portion in which a specific image included in the read image is located, the specific image being located outside a material read area of the read image, the material read area being an area obtained by reading the recording material; and
   specify the possible portion from the material read area based on the specified defect portion.
(((17))) The information processing system according to (((16))),
   wherein the processor is configured to:
   specify, as the defect portion, a portion in which a streak-like image located outside the material read area is located; and
   specify, as the possible portion, a portion of the material read area located on an extension line of the streak-like image.
(((18))) The information processing system according to (((16))) or (((17))), wherein the processor is configured to further generate an image in which a position indication image that is an image indicating a position of the possible portion has been added to a portion of the material read area in which the possible portion is located.
(((19))) A program causing a computer to execute a process comprising:
   specifying a defect portion that is a portion having a defect of a formed image that is an image formed by an image forming apparatus; and
   specifying a possible portion that is a portion possibly having a defect of the formed image or another image formed by the image forming apparatus, based on the specified defect portion.
(((20))) A program causing a computer to execute a process comprising:
   specifying a defect portion that is a portion having a defect of a read image that is an image obtained by a reading device reading a recording material; and
   specifying a possible portion that is a portion possibly having a defect of the read image, based on the specified defect portion.

With the information processing system according to (((1))), it is possible to improve the accuracy of diagnosis performed on an image forming apparatus that forms an image or a reading device that reads a recording material, compared to a case where a portion possibly having a defect or a portion possibly having a reading failure is not specified.

With the information processing system according to (((2))), it is possible to more clearly inform a person who performs diagnosis of the possible portion, compared to a case where the image in which the position indication image has been added is not generated.

With the information processing system according to (((3))), it is possible to inform the person who performs diagnosis of the information about the cause of the defect.

With the information processing system according to (((4))), it is possible to more clearly inform the person who performs diagnosis of the possible portion and the defect portion, compared to a case where the image in which the position indication image and the defect indication image have been added is not generated.

With the information processing system according to (((5))), it is possible to prevent the person who performs diagnosis from recognizing the possible portion as the defect portion or recognizing the defect portion as the possible portion, compared to a case where the position indication image and the defect indication image are the same.

With the information processing system according to (((6))), it is possible to prevent the person who performs diagnosis from recognizing the possible portion as the defect portion or recognizing the defect portion as the possible portion, compared to a case where the color and the shape of the position indication image and the color and the shape of the defect indication image coincide with each other.

With the information processing system according to (((7))), it is possible to prevent the person who performs diagnosis from recognizing the possible portion as the defect portion or recognizing the defect portion as the possible portion, compared to a case where the line type of the position indication image and the line type of the defect indication image are the same.

With the information processing system according to (((8))), it is possible to specify the possible portion in the formed image based on the defect portion.

With the information processing system according to (((9))), it is possible to specify the possible portion in the formed image based on the defect portion.

With the information processing system according to (((10))), it is possible to specify the possible portion for the other image different from the formed image that is a target of specifying the defect portion.

With the information processing system according to (((11))), it is possible to specify the possible portion in the other image based on the defect portion in the formed image.

With the information processing system according to (((12))), it is possible to specify the possible portion in the formed image based on the information about the constituent component included in the image forming apparatus.

With the information processing system according to (((13))), it is possible to specify the possible portion in the formed image based on the information about the constituent component included in the image forming apparatus.

With the information processing system according to (((14))), it is possible to specify the possible portion in the formed image based on the information about the constituent component included in the image forming apparatus.

With the information processing system according to (((15))), it is possible to improve the accuracy of diagnosis performed on an image forming apparatus that forms an image or a reading device that reads a recording material, compared to a case where a portion possibly having a defect or a portion possibly having a reading failure is not specified.

With the information processing system according to (((16))), it is possible to specify the possible portion from the material read area based on the specific image located outside the material read area that is the area obtained by reading the recording material.

With the information processing system according to (((17))), it is possible to specify the possible portion from the material read area based on the specific image located outside the material read area that is the area obtained by reading the recording material.

With the information processing system according to (((18))), it is possible to more clearly inform a person who performs diagnosis of the possible portion, compared to a case where the image in which the position indication image has been added is not generated.

With the program according to (((19))), it is possible to improve the accuracy of diagnosis performed on an image forming apparatus that forms an image or a reading device that reads a recording material, compared to a case where a portion possibly having a defect or a portion possibly having a reading failure is not specified.

With the program according to (((20))), it is possible to improve the accuracy of diagnosis performed on an image forming apparatus that forms an image or a reading device that reads a recording material, compared to a case where a portion possibly having a defect or a portion possibly having a reading failure is not specified.

## Claims

1. An information processing system comprising:
a processor configured to:
specify a defect portion that is a portion having a defect of a formed image that is an image formed by an image forming apparatus; and
specify a possible portion that is a portion possibly having a defect of the formed image or another image formed by the image forming apparatus, based on the specified defect portion.

2. The information processing system according to claim 1,
wherein the processor is configured to:
further generate an image in which a position indication image that is an image indicating a position of the possible portion has been added to a read image obtained by reading the formed image; and
further generate an image in which the position indication image has been added to a read image obtained by reading the other image.

3. The information processing system according to claim 1,
wherein the processor is configured to:
further generate an image in which a position indication image that is an image indicating a position of the possible portion and cause information that is information about a cause of the defect that the possible portion possibly has have been added to a read image obtained by reading the formed image; and
further generate an image in which the position indication image that is the image indicating the position of the possible portion and the cause information that is the information about the cause of the defect that the possible portion possibly has have been added to a read image obtained by reading the other image.

4. The information processing system according to claim 1, wherein the processor is configured to further generate an image in which a position indication image that is an image indicating a position of the possible portion and a defect indication image that is an image indicating a position of the defect portion have been added to a read image obtained by reading the formed image.

5. The information processing system according to claim 4, wherein the position indication image and the defect indication image are different from each other.

6. The information processing system according to claim 5, wherein at least one of a color and a shape is different between the position indication image and the defect indication image.

7. The information processing system according to claim 6,
wherein the position indication image is an image surrounding the possible portion with a line,
wherein the defect indication image is an image surrounding the defect portion with a line, and
wherein a line type of the position indication image and a line type of the defect indication image are different from each other.

8. The information processing system according to claim 1, wherein the specified defect portion includes a plurality of specified defect portions, and the processor is configured to specify the possible portion in the formed image based on an arrangement interval of the plurality of specified defect portions.

9. The information processing system according to claim 8, wherein the processor is configured to specify, as the possible portion, a portion separated from a defect portion serving as a predetermined reference among the plurality of specified defect portions by an integer multiple of the arrangement interval.

10. The information processing system according to claim 1, wherein the processor is configured to specify the possible portion in the other image based on a position of the defect portion in the formed image.

11. The information processing system according to claim 10,
wherein the processor is configured to:
specify a relative reference position that is a position of the defect portion in the formed image and is a relative position of the defect portion with respect to a reference position of the formed image; and
specify the possible portion in the other image based on a reference position of the other image and the relative reference position.

12. The information processing system according to claim 1, wherein the processor is configured to specify the possible portion in the formed image based on the specified defect portion and component information that is information about a constituent component that is a component included in the image forming apparatus.

13. The information processing system according to claim 12, wherein the processor is configured to specify the possible portion in the formed image based on the specified defect portion and information about a circumferential length of the constituent component that rotates.

14. An information processing system comprising:
a processor configured to:
specify a defect portion that is a portion having a defect of a read image that is an image obtained by a reading device reading a recording material; and
specify a possible portion that is a portion possibly having a defect of the read image, based on the specified defect portion.

15. A program causing a computer to execute a process comprising:
specifying a defect portion that is a portion having a defect of a formed image that is an image formed by an image forming apparatus; and
specifying a possible portion that is a portion possibly having a defect of the formed image or another image formed by the image forming apparatus, based on the specified defect portion.
